# EUROPÄISCHE PATENTANMELDUNG

(11) **EP 1 096 812 A2**
(43) Veröffentlichungstag der Anmeldung: **02.05.2001**
(21) Anmeldenummer: 00122916.0
(22) Anmeldetag: 20.10.2000
(51) Int. Cl.: H04Q 7/22

(54) **Ferneinstellung von Teilnehmerparametern im Mobilfunk über einen externen Nachrichtendienst**

(30) Priorität: 28.10.1999 DE 19951995
(71) Anmelder: SIEMENS AKTIENGESELLSCHAFT, 80333 München (DE)
(72) Erfinder: Krug, Richard, 36251 Bad Hersfeld (DE)

(57) **Zusammenfassung**

Die Erfindung bezieht sich auf ein Verfahren zur Einstellung von Parametern und/oder Diensten in einem Kommunikationssystem, insbesondere einem Funk-Kommunikationssystem, bei dem von einem Teilnehmer zumindest eine Änderungsanforderung an zumindest eine im Kommunikationssystem befindliche Stelle (MSC, VLR, HLR) zur Verwaltung von Änderungsanforderungen übermittelt werden kann. Mittels solcher Änderungsanforderungen können beispielsweise Anrufweiterleitungen eingerichtet werden.

Um im Kommunikationssystem auch Änderungsanforderungen verarbeiten zu können, wenn die normalerweise vom Teilnehmer verwendete Teilnebmerstation (MS) außer Betrieb ist, wird vorgeschlagen, im Kommunikationssystem auch Änderungsanforderungen zu akzeptieren, die von kommunikationsnetzfremden Stationen (PSTN) aus übermittelt werden. Dazu wird insbesondere eine Tabelle mit Informationen über zulässige fremde Stellen (PSTN) eingerichtet.

## Beschreibung

Die Erfindung betrifft ein Verfahren zur Einstellung von Parametern und/oder Diensten in einem Kommunikationssystem, insbesondere im Mobilfunk, gemäß den oberbegrifflichen Merkmalen des Patentanspruchs 1 sowie ein Kommunikationssystem zum Durchführen eines solchen Verfahrens.

In Funk-Kommunikationssystemen werden Informationen und/oder Nachrichten (beispielsweise Sprache, Bildinformationen oder andere Daten) mit Hilfe von elektromagnetischen Wellen über eine Funkschnittstelle zwischen sendender und empfangender Station übertragen. Die Funkschnittstelle verbindet insbesondere jeweils eine Basisstation mit einer oder mehreren Teilnehmerstationen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

In den derzeitigen Mobilfunknetzen gibt es eine Vielzahl von Zusatzdiensten, wie eine Anrufweiterschaltung (Call Forwarding), über die z.B. eingehende Anrufe bei nicht besetzter Teilnehmerstation auf einen anderen Anschluß oder eine Mailbox weitergeschaltet werden können. Ein anderes Beispiel solcher Dienste ist eine Anrufsperre (Call Barring), mittels der ein Teilnehmer Anrufe von allen oder ausgewählten Teilnehmern automatisch zurückweisen lassen kann. Auch ist es möglich, Anrufe von der Station des Teilnehmers selber zu bestimmten Stationen, z.B. Auslandsstationen oder Stationen mit Sondergebühren, hin zu sperren.

Solche Dienste kann der Teilnehmer jedoch nur von seiner registrierten Teilnehmer- bzw. Mobilstation aus modifizieren. Die Modifikation der Einstellungen solcher Dienste ist daher in einer Vielzahl von Situationen nicht möglich, beispielsweise falls der Akkumulator einer Mobilstation leer ist und keine sofortige Nachlademöglichkeit besteht, falls der Teilnehmer vergessen hat, seine Mobilstation auf eine Reise mitzunehmen, falls sich der Teilnehmer mit seiner Mobilstation in einem Funkloch befindet oder falls die Bedienung der gerade verwendeten Teilnehmerstation zur Änderung der Zusatzdienste zu kompliziert oder ungeeignet ist.

In einzelnen Situationen ist es bedingt möglich, daß ein Teilnehmer seine ihn identifizierende Chipkarte in ein kurzfristig ausgeliehenes fremdes Mobilfunkgerät einlegt, um mit diesem die Zusatzdienste einstellen zu können. Diese Lösung ist jedoch äußerst unbefriedigend und unpraktisch.

Für zukünftige Mobilfunksysteme wird derzeit die Einführung einer ganz neuen und eigenständigen Nachricht im Rahmen der "CAMEL Phase 3" erörtert. Über diese Nachricht soll ein jederzeitiger Zugriff (Any-Time Modification) auf bestimmte Zusatzdienste ermöglicht werden. Das Einführen einer neuen Nachricht macht jedoch einen großen technischen Aufwand erforderlich und ist insbesondere für derzeitige Mobilfunksysteme uninteressant.

Der Erfindung liegt die Aufgabe zugrunde, ein Verfahren und ein Kommunikationssystem bereitzustellen, bei denen ein Teilnehmer mit einer nicht direkt zum Kommunikationssystem gehörenden Station Zusatzdienste modifizieren kann.

Diese Aufgabe wird durch das Verfahren mit den Merkmalen des Anspruchs 1 bzw. das Kommunikationssystem mit den Merkmalen des Anspruchs 9 gelöst.

Das Akzeptieren und Verarbeiten von Änderungsanforderungen, die von externen Einrichtungen und Kommunikationssystemen aus eingehen, ermöglicht die einfache Einstellung und Änderung von Diensten und Parametern in einem Kommunikationssystem auch dann, wenn der Teilnehmer sich aus verschiedenartigsten Gründen nicht regulär in das Kommunikationsnetz einbuchen kann.

Vorteilhafte Weiterbildungen sind Gegenstand von Unteransprüchen.

Insbesondere das Überprüfen, von wo eine Änderungsanforderung eintrifft, ermöglicht eine effiziente und zügige Abarbeitung von Änderungsanforderungen ohne das bestehende Kommunikationsnetz übermäßig zu belasten. Im Fall von Änderungsanforderungen von Stellen aus dem Kommunikationsnetz können diese daher mit den üblichen Verfahren bearbeitet werden und insbesondere direkt an die als zuständig registrierte Mobilvermittlungsstelle übermittelt werden. Im Fall von einer Änderungsanforderung von einer Stelle außerhalb des Kommunikationsnetzes kann ein entsprechender Eintrag im Kommunikationssystem vorgenommen werden, insbesondere im zuständigen Heimatregister.

Vorteilhafterweise wird im Kommunikationssystem zumindest eine Tabelle bereitgestellt, in die Informationen über zu akzeptierende externe Stellen eingetragen werden, so daß eine Steuerungsmöglichkeit und jederzeit auch eine Sicherheitskontrolle gegen nicht berechtigte Fremdzugriffe ermöglicht wird.

Besonders vorteilhaft ist auch die Möglichkeit, bestehende Nachrichten und/oder Nachrichtenprotokolle verwenden zu können, insbesondere MAP-Messages, um im Kommunikationssystem externe Änderungsanforderungen bearbeiten zu können.

Nachfolgend wird ein Ausführungsbeispiel anhand der Zeichnung näher erläutert. Es zeigt die einzige Figur
- Fig. 1: ein Blockschaltbild eines im wesentlichen bekannten Mobilfunksystems und
- Fig. 2: ein Ablaufdiagramm für den Fall einer akzeptierten externen Änderungsanforderung bei einem Eintrag der externen Stelle im Kommunikationssystem.

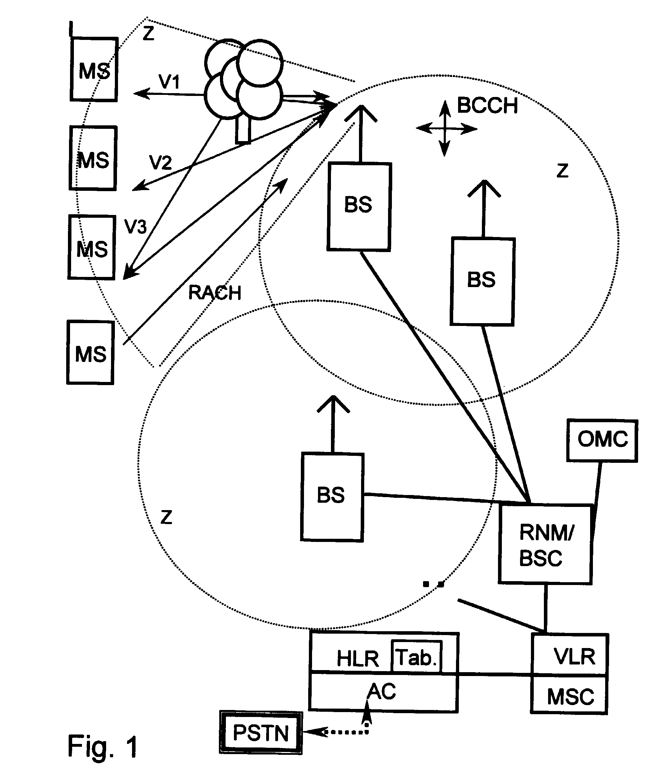

Das in Fig. 1 dargestellte Mobilfunksystem als Beispiel eines im wesentlichen bekannten Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM, die auch als Basisstations-Steuereinrichtungen BSC bezeichnet werden, ermöglicht wiederum eine Verbindung zu zumindest einer Basisstation BS. Eine solche Basisstation BS kann über eine Funkschnittstelle eine Verbindung zu Teilnehmerstationen, z.B. mobilen Stationen MS, oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 sind beispielhaft bestehende Verbindungen V1, V2, V3 zur Übertragung von Nutzinformationen und Signalisierungsinformationen zwischen mobilen Stationen MS und einer Basisstation BS und eine Anforderung zur Ressourcenzuteilung oder eine kurze Bestätigungsmeldung in einem Zugriffskanal RACH (RACH: Random Access Channel) durch eine weitere mobile Station MS dargestellt. Weiterhin ist ein Organisationskanal BCCH (BCCH: Broadcast Control CHannel) dargestellt, der zur Übertragung von Nutz- und Signalisierungsinformationen mit einer definierten Sendeleistung von jeder der Basisstationen BS für alle mobilen Stationen bereitgestellt wird. Ein Operations- und Wartungszentrum OMC realisiert Kontroll- und Wartungsfunktionen für das Mobilfunksystem bzw. für Teile davon.

Die Funktionalität dieser Struktur ist insbesondere auch auf andere Kommunikationssysteme übertragbar, insbesondere für Teilnehmerzugangsnetze mit drahtlosem Teilnehmeranschluß.

Bevor eine Teilnehmerstation MS innerhalb eines zellularen Funksystems mit der Datenübermittlung beginnen kann, muß diese Teilnehmerstation MS Systemressourcen bei einer übergeordneten Systemeinheit anfordern, z.B. bei der Basisstation BS oder einem Basisstations-Steuerzentrum BSC. In einem zellularen Mobilfunksystem erfolgt die Ressourcenanfrage einer mobilen bzw. Teilnehmerstation MS durch einen zufälligen Prozeß über eine vom System vorgesehene ggf. auch reservierte Systemressource. Die Ressourcenanfrage dient dabei zum erstmaligen Verbindungsaufbau oder zum Wiederbeleben einer bereits aufgebauten Verbindung.

In einem Heimatregister HLR (HLR: Home Location Register), das sich auch in oder bei einer zuständigen Mobilvermittlungsstelle MSC befinden kann, wird eingetragen, in welchem Bereich sich die Teilnehmer- bzw. Mobilstation MS befindet.

Das Funk-Kommunikationsnetz kann eine Änderungsanforderung für die Einrichtung eines Dienstes (SCI: Subscriber Controlled Input) entgegennehmen und korrekt bearbeiten, wenn diese Änderungsanforderung von der Mobilvermittlungsstelle MSC kommt, bei der der zugehörige Teilnehmer gerade tatsächlich eingebucht ist.

Ziel der nachfolgenden Erörterungen ist die Ermöglichung eine Modifikation von Zusatzdiensten und/oder Parametern von einer Station PSTN aus, die nicht direkt als Station des Teilnehmers im Kommunikationsnetz eingebucht ist oder die nicht zum Netz gehört. Als Beispiel wird die Einrichtung einer Anrufumleitung auf einen externen Festnetzanschluß PSTN eines Hotels beschrieben, um dort Anrufe entgegennehmen zu können. Diese externe Station, die nicht zum Kommunikationsnetz des Teilnehmers gehört, soll insbesondere auch zur Einrichtung der Anrufumleitung verwendet werden können.

Geht beim Funk-Kommunikationsnetz eine Änderungsanforderung für die Einrichtung eines Dienstes (SCI: Subscriber Controlled Input) von einer externen Station ein, die einen Berechtigungsnachweis für die Änderung bzw. des Teilnehmers umfaßt, so ist das derzeitige Funk-Kommunikationsnetz nicht in der Lage, die Änderungsanforderung korrekt zu bearbeiten. Dem Kommunikationssystem fehlt in einem solchen Fall die Möglichkeit festzustellen bzw. zu unterscheiden, ob diese Änderungsanforderung über die Mobilvermittlungsstelle MSC kommt, bei der der Teilnehmer gerade eingebucht ist, oder von einer anderen, insbesondere externen Stelle kommt, beispielsweise von einem speziellen Server, wie z.B. einem Internet-, Intranet-, Voicemail- bzw. Sprachmail- oder IN-Server.

Kommt die Änderungsanforderung von einer solchen externen Stelle, hier dem Festnetz PSTN, so wird eine Aufhebungsnachricht für den Teilnehmer (CancelSubscriber-Message) an die bisherige und vermeintlich nicht mehr aktuelle Mobilvermittlungsstelle MSC geschickt, wodurch der Teilnehmer in der Datenbasis des Besucherortsregisters VLR gelöscht wird. Die daraufhin geänderten Daten werden der Stelle übermittelt, von der die Änderungsanforderung ausging. Diese Stelle ist jedoch keine richtige Mobilvermittlungsstelle MSC mit einem Besucherortsregister VLR, so daß die geänderten Teilnehmerdaten im Kommunikationsnetz gar nicht oder nur beschränkt verfügbar sind. Dadurch ist der Teilnehmer bis zu seinem nächsten Einbuchen in das Kommunikationsnetz mittels seiner Teilnehmerstation MS und damit einer erneuten Ortsaktualisierung (Location Update) nur beschränkt erreichbar, nämlich z.B. nur über einen Umleitungsweg.

Zur Beseitigung dieses Nachteils wird in einer Stelle des Kommunikationssystems, insbesondere in dem Heimatregister HLR, das sich bei größeren Systemen meistens in der Mobilvermittlungsstelle MSC befindet, aber auch in einer anderen Einrichtung oder als eigenständige Einheit des Kommunikationssystems bereitgestellt sein kann, eine spezielle Tabelle Tab eingerichtet oder eine bestehende Tabelle geeignet ergänzt. In dieser Tabelle Tab kann der Betreiber des Kommunikationsnetzes alle Stellen bzw. deren Netzknotennummern eintragen, von denen das Heimatregister HLR eine Änderungsanforderung akzeptieren soll. Dies alles macht im Idealfall nur geringe Programmierarbeiten erforderlich.

Wird nun vom Heimatregister HLR eine Änderungsanforderung empfangen, so wird die Nummer des sendenden Netzknotens in der Tabelle Tab gesucht. Falls diese Nummer in der Tabelle Tab nicht enthalten ist, so wird die Änderungsanforderung so behandelt, wie ohne die Existenz einer Tabelle. D.h. die Änderungsanforderung wird so behandelt, als komme sie aus der Mobilvermittlungsstelle MSC, in der der Teilnehmer momentan eingebucht oder registriert ist.

Ist die Nummer hingegen in der Tabelle Tab enthalten, so wird die Änderungsanforderung als eine externe bzw. remote Änderungsanforderung behandelt. In diesem Fall wird an die bisherige und vermeintlich noch zuständige Mobilvermittlungsstelle MSC keine Aufhebungsnachricht für den Teilnehmer (CancelSubscriber-Message) geschickt. Anstelle dessen wird eine Teilnehmerdaten-Einsetzungs-Nachricht (InsertSubscriberDataMessage) an das aktuell zuständige Besucherortsregister VLR der vermeintlich noch zuständigen Mobilvermittlungsstelle geschickt, um dort, wenn es notwendig ist, die gerade geänderten Teilnehmerdaten zu aktualisieren.

Zusätzlich wird es nun durch die Unterscheidung einer internen von einer externen Anforderung möglich, eine Abfrage (Interrogation) auch anderer, insbesondere aller Dienste - und nicht nur des Anrufweiterleitungsdienstes - durch das Heimatregister HLR beantworten lassen bzw. zu ermöglichen.

Mit anderen Worten wird im Kommunikationssystem eine Tabelle Tab bereitgestellt, durch die eine einfache Abfrage ermöglicht wird, ob eine Anforderung, insbesondere Änderungsanforderung, über andere Wege als nur die zum Kommunikationssystem gehörende und für den Teilnehmer registrierte Teilnehmerstation MS eingegangen ist. Dadurch können Betreiber von Kommunikationsnetzen den Teilnehmern gezielt ermöglichen Änderungen vorzunehmen, die in dem Kommunikationssystem über eine entfernte Stelle PSTN angefordert werden.

Besonders vorteilhaft ist dabei, daß für den Einsatz bei insbesondere auch den bereits bestehenden Kommunikationssystemen eine Einführung neuer Nachrichten vermeidbar ist, wie sie für die zukünftige CAMEL Phase 3-Lösung erörtert wird. Die bestehenden MAP-Nachrichten (MAP: Mobile Application Part protokoll) reichen bereits aus.

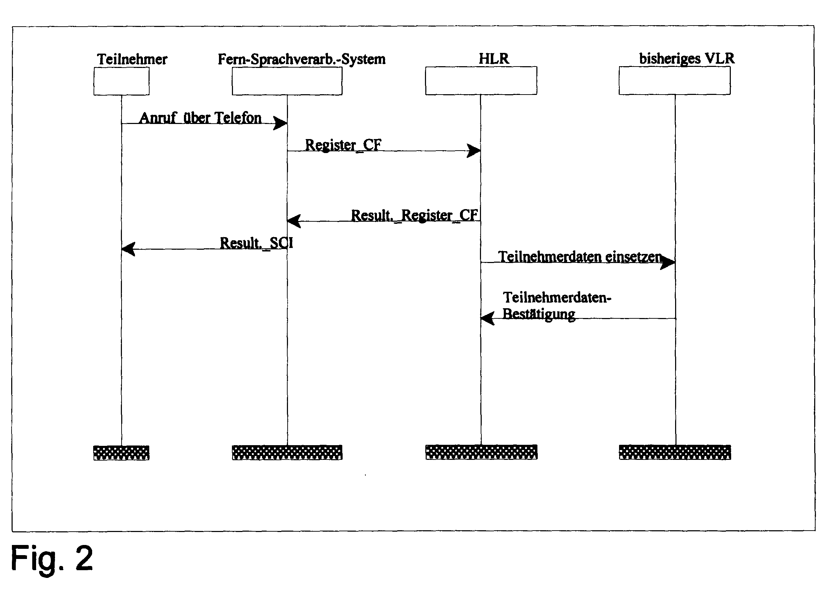

Ein Beispiel für den Ablauf einer sprachgesteuerten Änderungsanforderung über ein externes Kommunikationsnetz ist anhand der Fig. 2 dargestellt. In einem ersten Schritt ruft ein Teilnehmer von einer Station im externen Netz aus bei einer zentralen Stelle seines normalen Kommunikationsnetzes an. Dort werden in einem Sprachverarbeitungssystem für externe Anrufe in einem automatisch gesteuerten Abfrageprozeß gesprochene Anweisungen des Teilnehmers oder Tastatursignale von dessen externer Station ausgewertet. Erfaßt das Sprachverarbeitungssystem Änderungsanforderungen, so sendet es eine Registrierungsmeldung Register_CF an das für den identifizierten Teilnehmer zuständige Heimatregister HLR. Dabei wird eine ganz bestimmte VLR-Nummer mitgesendet. Diese VLR-Nummer ist beim Heimatregister HLR bekannt und wird bei jeder Änderungsanforderung überprüft. Bei Übereinstimmung mit der Tabelle Tab wird die ansonsten übliche Prüfung der bisherigen VLR-Nummer übergangen und dadurch auch keine Aufhebungsnachricht an das Besucherortsregister VLR gesendet.

Vom Heimatregister HLR aus wird eine Bestätigungsmeldung SCI über das Sprachverarbeitungssystem an die momentane Teilnehmerstation zurückgesendet. Außerdem sendet das Heimatregister HLR eine Anweisung zum einsetzen entsprechender Teilnehmerinformationen bzw. -daten an das bisherige VLR und empfängt von dort eine entsprechende Teilnehmer-Bestätigungsmeldung.

## Patentansprüche

1. Verfahren zur Einstellung von Parametern und/oder Diensten in einem Kommunikationssystem, insbesondere einem Funk-Kommunikationssystem, bei dem von einem Teilnehmer zumindest eine Änderungsanforderung an zumindest eine im Kommunikationssystem befindliche Stelle (MSC, VLR, HLR) zur Verwaltung von Änderungsanforderungen übermittelbar ist,
dadurch gekennzeichnet,
daß die zumindest eine Änderungsanforderung über zumindest eine externe Stelle (PSTN) außerhalb des Kommunikationssystems übermittelbar ist.

2. Verfahren nach einem vorstehenden Anspruch, bei dem beim Eintreffen einer Änderungsanforderung überprüft wird, ob die Änderungsanforderung von einer internen oder einer externen Stelle (MSC, VLR; PSTN) eintrifft.

3. Verfahren nach Anspruch 2, bei dem eine Änderungsanforderung von einer Stelle (MSC, VLR) aus dem Kommunikationsnetz gemäß den üblichen Verfahren bearbeitet wird, insbesondere an die als zuständig registrierte Mobilvermittlungsstelle (MSC) übermittelt werden.

4. Verfahren nach Anspruch 2 oder 3, bei dem beim Eintreffen einer Änderungsanforderung von einer Stelle (PSTN) außerhalb des Kommunikationsnetzes ein entsprechender Eintrag im Kommunikationssystem, insbesondere im zuständigen Heimatregister (HLR), vorgenommen wird.

5. Verfahren nach einem vorstehenden Anspruch, bei dem im Kommunikationssystem zumindest eine Tabelle (Tab) bereitgestellt wird, in die Informationen über zu akzeptierende externe Stellen (PSTM) eingetragen werden.

6. Verfahren nach Anspruch 5, bei dem die Informationen die Nummern externer Stellen (PSTN) umfassen.

7. Verfahren nach einem vorstehenden Anspruch, bei dem die einstellbaren Dienste Anrufweiterleitungen, Mailboxen und/oder Anrufsperren einrichten.

8. Verfahren nach einem vorstehenden Anspruch, bei dem eine externe Änderungsanforderung unter Einsatz von im Kommunikationssystem bestehenden Nachrichten und/oder Nachrichtenprotokollen bearbeitet wird.

9. Kommunikationssystem, insbesondere Funk-Kommunikationssystem, zum Durchführen eines Verfahrens nach insbesondere einem der vorstehenden Ansprüche, mit
- zumindest einer Registrierungseinrichtung (MSC, HLR) zum Registrieren des aktuellen und/oder letzten Aufenthaltsbereichs eines im Kommunikationssystem registrierten Teilnehmers,
- zumindest einer Diensteeinstellungseinrichtung zum Einrichten von Diensten aufgrund von zumindest einer Änderungsanforderung seitens des Teilnehmers und
- zumindest einer Schnittstelle (MSC-PSTN) zum Einrichten von Kommunikationen mit externen Kommunikationseinrichtungen (PSTN) eines fremden Kommunikationssystems,
dadurch gekennzeichnet, daß
- das Kommunikationssystem eine Verwaltungseinrichtung (Tab) zum Verwalten von Änderungsanforderungen aufweist, die von einem Kommunikationssystem-Teilnehmer von einer externen Kommunikationseinrichtung (PSTN) aus übermittelt werden.

10. Kommunikationssystem nach Anspruch 11, bei dem die Verwaltungseinrichtung eine Tabelle (Tab) mit Informationen über zu akzeptierende externe Kommunikationseinrichtungen aufweist.
